# EUROPÄISCHE PATENTSCHRIFT

(11) **EP 1 566 588 B1**
(45) Veröffentlichungstag und Bekanntmachung des Hinweises auf die Patenterteilung: **17.09.2008**
(21) Anmeldenummer: 05000681.6
(22) Anmeldetag: 14.01.2005
(51) Int. Cl.: F16P 3/14, G01V 8/20

(54) **Lichtschranke oder Lichtgitter mit Ausrichthilfe**
Light curtain or light barrier with aligning aid
Rideau de lumière ou barrière optique avec dispositif d'alignement

(30) Priorität: 19.02.2004 DE 102004008059
(43) Veröffentlichungstag der Anmeldung: 24.08.2005
(73) Patentinhaber: SICK AG, 79183 Waldkirch (DE)
(72) Erfinder: Fetzer, Günter, 79194 Gundelfingen (DE); Rieger, Daniel, 79102 Freiburg (DE); Wüstefeld, Martin, 79350 Sexau (DE)
(74) Vertreter: Ludewigt, Christoph

(56) Entgegenhaltungen:
- EP-B- 0 889 332
- DE-U1- 20 317 622
- US-A- 3 752 978

## Beschreibung

Die Erfindung betrifft eine Lichtschranke oder ein Lichtgitter nach dem Oberbegriff des Anspruchs 1.

Derartige Lichtschranken oder Lichtgitter werden verwendet, um Zugangsbereiche zum Beispiel an gefahrbringenden Werkzeugmaschinen zu überwachen.

Während in einer Lichtschranke nur ein Lichtsender und nur ein Lichtempfänger eingebaut sind, die den Zugangsbereich mit einer Linie durchstrahlen, sind bei einem Lichtgitter mehrere Lichtsender und Lichtempfänger vorhanden, die diesen gefährdeten Bereich an mehreren parallel zueinander versetzten Linien durchstrahlen.

Der Begriff "Licht" ist hierbei auf das sichtbare Licht beschränkt.

In den hier beschriebenen Lichtschranken bzw. Lichtgittern nach dem Einwegprinzip sind der bzw. die Lichtsender in einem ersten Gehäuse und der bzw. die Lichtempfänger in einem zweiten Gehäuse eingebaut. Damit die Lichtsender auf der einen Seite des zu überwachenden Zugangsbereiches mit den Lichtempfängern auf der anderen Seite des Zugangsbereiches miteinander korrespondieren können ist es notwendig, die beiden Gehäuse gegenseitig aufeinander auszurichten, d. h. sie müssen ggf. linear verschoben, gedreht oder gekippt werden. Aus diesem Grunde ist es bekannt, zum Ausrichten dieser Gehäuse sogenannte Ausrichthilfen zu verwenden. So kann besonders bei großen Abständen vom Lichtsender zum Lichtempfänger die Ausrichtung der Gehäuse mit einem fest eingebauten oder externen adaptierbaren Zielfernrohr durchgeführt werden. Weiterhin ist bekannt, die Justage unter Zuhilfenahme des eigenen Lichtschranken-/Lichtgittersignals vorzunehmen. Bei dieser Methode wird die Ausrichtung des Lichtsenders und des Lichtempfängers so lange verändert, bis das Empfangssignal einen maximalen Wert erreicht hat. Dazu ist es bekannt, zum Beispiel in Abhängigkeit von der Größe des Empfangssignals, die Blinkfrequenz einer Anzeigediode zu verändern oder beispielsweise ein akustisches Signal auszugeben.
Eine weitere Einrichtung zum Ausrichten der beiden Gehäuse ist aus der EP 0 889 332 B1 bekannt. In dieser Druckschrift wird ein Verfahren und eine Vorrichtung beschrieben, bei der in jedem Gehäuse ein Ausrichtlichtsender zum Aussenden eines Richtstrahles vorhanden ist, bzw. der zweite Richtstrahl vom ersten Richtstrahl durch mehrere exakt justierte Umlenkspiegel erzeugt wird.

Nachteilig bei dem bekannten Verfahren zur Ausrichtung der Lichtschranke/Lichtgitter sind zum Beispiel bei der Zielfernrohrlösung die damit verbundenen Kosten und der benötigte Platzbedarf. Bei der Lösung unter Zuhilfenahme des Empfangssignals ist dagegen der zum Ausrichten erforderliche Zeitaufwand recht hoch.
Der Nachteil bei der in der Druckschrift EP 0 889 332 B1 beschriebenen Ausrichthilfe besteht darin, dass es bei der gegenseitigen geometrischen Ausrichtung der beiden Gehäuse notwendig ist, dass immer das gegenüberliegende Gehäuse eingesehen werden muss, um die Ausrichtung durchführen zu können. Dies kann insbesondere bei großen Abständen und hoher Umgebungshelligkeit zu Problemen führen. Besonders schwierig ist diese Art der Ausrichthilfe dann, wenn die Lichtstrahlen der Lichtschranke/Lichtgitter mit Umlenkspiegeln durch einen abgewinkelten Zugangsbereich geführt werden. Außerdem ist diese Ausrichthilfe durch die Tatsache, dass in jedem Gehäuse ein Ausrichtlichtsender eingebaut und betrieben werden muss, bzw. dadurch, dass mehrere genau justierte Umlenkspiegel notwendig sind, insgesamt kostenaufwendig. Zudem wird viel Zeit für die Ausrichtung benötigt.

Weitere Ausrichthilfen sind aus den Druckschriften DE 203 17 622 U1 und US 3,752,978 bekannt.

Der Erfindung liegt die Aufgabe zugrunde, eine Lichtschranke oder ein Lichtgitter der eingangs genannten Art derart mit einer Ausrichthilfe auszubilden, dass dafür nur geringe Herstellkosten entstehen, dass die Baugröße der Lichtschranken/Lichtgitter durch die Ausrichthilfe nicht vergrößert wird und dass der Einsatz selbst bei großen Abständen der beiden Gehäuse und/oder beim Einsatz von Umlenkspiegel im Zugangsbereich problemlos möglich ist.

Erfindungsgemäß besteht die Lösung in einer Lichtschranke oder einen Lichtgitter gemäß Anspruch 1 oder Anspruch 6.

Der Vorteil diesen erfindungsgemäßen Ausbildungen des zweiten Gehäuses mit einer Zieleinrichtung zur Ausrichtung auf den bzw. die vom gegenüberliegenden Gehäuse ausgesandten Richtstrahlen, ermöglicht die optischen Achsen der in diesem Gehäuse eingebauten Lichtsender/Lichtempfänger exakt auf das erste Gehäuse auszurichten. Da mit der Zieleinrichtung der Ausrichtungszustand des zweiten Gehäuses auf den, bzw. die Richtstrahlen direkt im zweiten Gehäuse angezeigt wird, ist es auch nicht notwendig, dass zur Ausrichtung dieses zweiten Gehäuses das erste Gehäuse eingesehen werden muss. Da die integrierte Zieleinrichtung lediglich aus einer den Richtstrahl ablenkenden Fläche besteht, ist der dafür benötigte Platzbedarf klein, die damit verbundenen Herstellkosten sehr gering.

Eine vorteilhafte Weiterbildung der Erfindung sieht vor, dass die Zielscheibe unter einem Winkel von ca. 45° zu der Lichteintrittsfläche des Gehäuses angeordnet ist.

Dadurch ist es dem Einrichter möglich, die Zielscheibe innerhalb des Gehäuses unter einem großen Blickwinkel einsehen zu können.

Eine unter Kostengesichtspunkten optimierte Variante sieht vor, dass die Zielscheibe auf der Innenseite des Bodens vom Gehäuse angeordnet ist. Dadurch ist es möglich, die Funktion der Zielscheibe durch einfache Kontrastmarken, die auf der Innenseite des Bodens angebracht sind, zu ersetzen. Insbesondere dann, wenn das Gehäuse beispielsweise in Druckguss- oder Kunstzoffspritztechnik hergestellt wird, können diese Kontrastmarken bereits in der Werkzeugform angebracht sein, so dass keine weiteren Kosten für die Zielscheibe entstehen und der Aufwand für deren Einbau einer separaten Zielscheibe im Gehäuse entfällt.

In einer vorteilhaften Ausbildung der Zielscheibe ist es vorgesehen, dass auf der Zielscheibe um den Sollpunkt herum ringförmige und/oder kreuzförmige Linien angeordnet sind. Dadurch wird der Ausrichtvorgang erleichtert, denn der Sollpunkt, auf den der Richtstrahl hingeführt werden muss, ist gut zu erkennen.

Wenn sich die Zieleinrichtung im Wesentlichen entlang der Gehäuseachse erstreckt, die senkrecht zum auftreffenden Richtstrahl verläuft, hat dies insbesondere bei der Anwendung der Erfindung in einem Lichtgitter den großen Vorteil, dass die beim Lichtgitter systembedingte Baulänge des Gehäuses dazu genutzt werden kann, den optischen Weg des Richtstrahles zwischen dem Umlenkspiegel und der Zielscheibe groß zu halten und damit den Richtstrahl in Form eines langen optischen Zeigers zu nutzen, was die Anzeigegenauigkeit der Zieleinrichtung wesentlich erhöht.

Die Erfindung sieht ebenso vor, dass eine optisch eblerhende Fläche und eine Zielfläche der Zieleinrichtung, in einem optisch transparenten Prisma zusammengefasst sind. Dieses Prisma, das hinsichtlich seiner optisch wirksamen Flächen die Form eines Halbwürfels aufweist, hat den großen Vorteil, dass die Justage des Umlenkspiegels und der Zielscheibe zueinander entfällt, weil dies durch die Bauform des Prismas vorgegeben wird. Ebenso ist auch die Justage dieser nur aus einem Prisma bestehenden Zieleinrichtung innerhalb des Gehäuses sehr einfach, weil nur die Basisfläche des Prismas parallel zu der Gehäusefläche ausgerichtet werden muss, in die der ankommende Richtstrahl eintritt.

Es ist aus mehreren Gründen von besonderem Vorteil, wenn die Zieleinrichtung innenliegend im Gerät angeordnet ist. In diesem Fall ist es jedoch notwendig, dass der Richtstrahl in das Gehäuse eindringen kann und dass auch die Zielscheibe von Außen einsehbar ist. Aus diesem Grunde ist es notwendig, dass im Gehäuse entsprechende Fenster vorhanden sind. Da die Lichtschranken-/Lichtgittergehäuse oft unter rauen Umweltbedingungen betrieben werden, d. h. in der Regel eine hohe Schutzklasse aufweisen müssen, ist es notwendig, dass beim Einbau aller optischen Fenster im Gehäuse hohe Dichtigkeitsanforderungen erfüllt werden. Jedes zusätzliche Fenster verursacht deshalb nicht unerhebliche zusätzliche Kosten. In Weiterbildung der Erfindung wird deshalb vorgeschlagen, zum Eintritt des Richtstrahles ins Gehäuse und zur Beobachtung des Auftreffpunktes des Richtstrahles auf der Zielscheibe die für den Funktionsbetrieb der Lichtschranken-/Lichtgitter vorhandene Abschlussscheibe ggf. so anzupassen, dass für alle Funktionen nur eine gemeinsame Abschlussscheibe im Gehäuse eingebaut werden muss. Dies hat den Vorteil, dass sich somit durch den Einbau der Zieleinrichtung die Herstellkosten des Gehäuses nicht oder nur unwesentlich erhöhen.

Schließlich ist in einer weiteren Ausbildung der Erfindung vorgesehen, dass die Zielscheibe die Form eines zweidimensionalen ortsauflösenden Empfangselementes hat, so dass neben der visuellen Betrachtung des Auftreffpunktes des reflektierten Richtstrahls, dieser auch, zum Beispiel in Form einer numerischen Anzeige, darstellbar ist. Auf diese Art kann die mit der Zieleinrichtung erreichbare Justiergenauigkeit ggf. deutlich erhöht werden.

Im Folgenden wird die Erfindung an Hand von Ausführungsbeispielen unter Bezugnahme auf die Zeichnungen im Einzelnen erläutert.
In der Zeichnung zeigen:
- Figur 1: eine perspektivische Darstellung einer Lichtschrankenanordnung mit einem einen Richtstrahl aussendenden ersten Gehäuse und einem zweiten Gehäuse mit Zieleinrichtung;
- Figur 2: eine perspektivische Darstellung einer Zieleinrichtung mit Umlenkspiegel und Zielscheibe, die auf dem Boden des Gehäuses angeordnet ist;
- Figur 3: eine perspektivische Darstellung einer Zieleinrichtung, bei welcher die optisch ablenkende Fläche und die Zielfläche in einem gemeinsamen Prisma zusammengefasst sind.

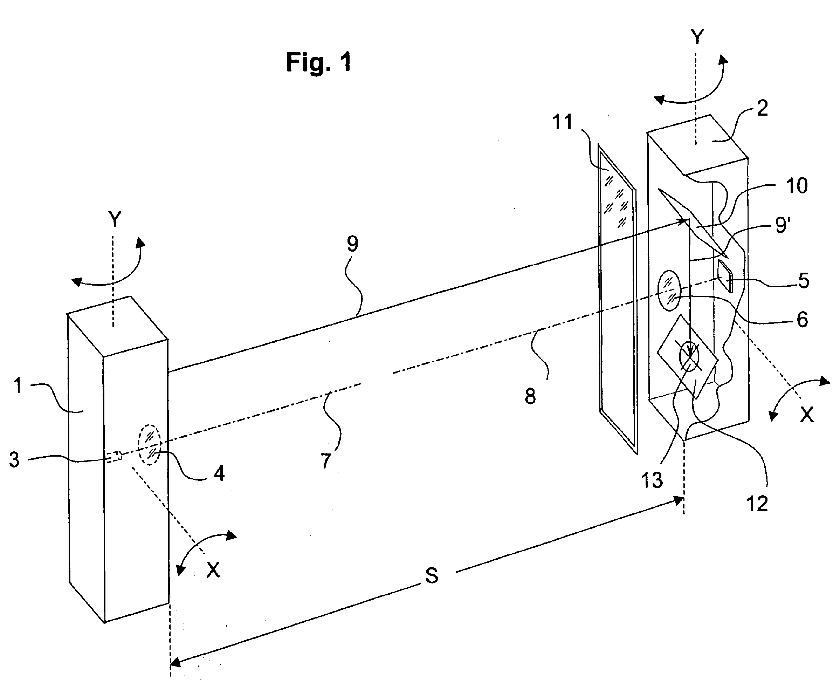

Die Figur 1 zeigt eine Lichtschrankenanordnung mit einem ersten Gehäuse 1 und einem zweiten Gehäuse 2. In dem ersten Gehäuse 1 ist beispielsweise ein Lichtsender, bestehend aus einer Lichtquelle 3 und einer Sendeoptik 4 eingebaut, welcher mit einem Lichtempfänger, bestehend aus einem lichtempfindlichen Element 5 und einer Empfangsoptik 6 im zweiten Gehäuse 2 korrespondiert. Die optische Achse des Lichtsenders 7 als auch die optische Achse des Lichtempfängers 8 sind dabei exakt innerhalb dem jeweiligen Gehäuse justiert.

Zwischen dem ersten Gehäuse 1 und dem zweiten Gehäuse 2 befindet sich der zu überwachende Zugangsbereich S. Damit der Lichtsender mit dem Lichtempfänger korrespondieren kann, müssen beide Gehäuse aufeinander ausgerichtet werden. Dazu ist es notwendig, die beiden Gehäuse jeweils zumindest in den beiden Rotationsachsen x und y so zu verschwenken, dass der vom Lichtsender ausgesandte Lichtstrahl vom Lichtempfänger optimal erfasst wird. Über entsprechende Montagemittel werden die beiden ausgerichteten Gehäuse in dieser Lage am jeweiligen Einbauort fixiert.
Um die gegenseitige Justage der beiden Gehäuse durchführen zu können ist es vorgesehen, dass aus dem ersten Gehäuse 1 ein gut sichtbarer Richtstrahl 9, beispielsweise ein paralleler roter Laserstrahl, ausgesandt wird. Dieser Richtstrahl 9 wurde zuvor bei der werksseitigen Montage so im Gehäuses 1 ausgerichtet, dass er exakt in der gleichen Richtung wie der Lichtsender der Lichtschranke aus dem Gehäuse 1 austritt. Wird nun das Gehäuses 1 um eine oder beide Rotationsachsen x bzw. y verschwenkt, so verändert sich dann natürlich die Abstrahlrichtung des Richtstrahls 9 und die optische Achse 7 des Lichtsenders in gleichem Maße. Dies wiederum bedeutet, dass wenn der Richtstrahl 9 exakt auf das Zentrum eines im zweiten Gehäuse eingebauten Umlenkspiegels 10 fällt, das Gehäuse 1 und damit auch der Lichtsender richtig zum Gehäuse 2 justiert ist.
Im nachfolgenden Justageschritt muss nun das Gehäuse 2 in seinen Rotationsachsen x und y derart justiert werden, dass die optische Achse 8 des Lichtempfängers genau auf den einfallenden Lichtstrahl der Lichtschranke ausgerichtet ist. Zu diesem Zweck ist im Gehäuse 2 hinter einer Abschlussscheibe 11 eine Zieleinrichtung, bestehend aus dem Umlenkspiegel 10 und einer Zielscheibe 12, vorgesehen. Gemäß der Darstellung in Figur 1 ist der Umlenkspiegel 10 hinter der Abschlussscheibe 11 unter einem Winkel von 45° angeordnet. Der auftreffende Richtstrahl 9 wird an diesem Umlenkspiegel 10, entsprechend dem optischen Reflexionsgesetz, umgelenkt und als Richtstrahl 9' im Gehäuse 2 zur Zielscheibe 12 geleitet. Im Ausführungsbeispiel, gemäss Figur 1, ist die Zielscheibe 12 unter einem Winkel von näherungsweise 45° angeordnet. Die Oberfläche der Zielscheibe 12 ist so ausgebildet, dass der auftreffende Richtstrahl 9' daran diffus gestreut wird. Auf diese Weise kann genau erkannt werden, an welchem Ort der Richtstrahl 9' auf die Zielscheibe 12 auftrifft. Wie bereits erwähnt, ist der Umlenkspiegel 10 unter einem Winkel von 45° hinter der Abschlussscheibe 11 angeordnet. Dies bedeutet, dass der auftreffende Richtstrahl 9 nur dann exakt um 90° am Umlenkspiegel 10 abgelenkt wird, wenn der Richtstrahl 9 exakt rechtwinklig auf die Abschlussscheibe 11 auftrifft. Da die Zielscheibe 12 innerhalb der Zieleinrichtung in einer genauen geometrischen Zuordnung platziert ist, wird der am Umlenkspiegel 10 reflektierte Richtstrahl 9' auch nur dann genau das Zentrum der Zielscheibe 12 treffen, wenn der Richtstrahl 9 exakt rechtwinklig auf die Abschlussscheibe 11 auftrifft. Die Abschlussscheibe 11, welche in Figur 1 zum Zwecke der besseren Darstellung mit geringen Abstand vom Gehäuse 2 entfernt dargestellt ist, schließt in der Realität direkt das Gehäuse 2 auf der Seite des Lichteintritts ab. Gleichzeitig ist die Abschlussscheibe 11 von ihrer Größe so dimensioniert, dass sowohl der Lichtstrahl der Lichtschranke als auch der Richtstrahl 9 ungehindert in das Gehäuse 2 eindringen können und dass der Einrichter bei der Ausrichtung und Montage der Lichtschranke einen ungehinderten Einblick auf die Zielscheibe 12 nehmen kann. Auf der Zielscheibe 12 ist das Zentrum, d. h. der Sollpunkt, auf den der reflektierte Richtstrahl 9' eingerichtet werden soll, beispielsweise mit einer ringförmigen und/oder mit kreuzförmig angeordneten Linien 13 gekennzeichnet.

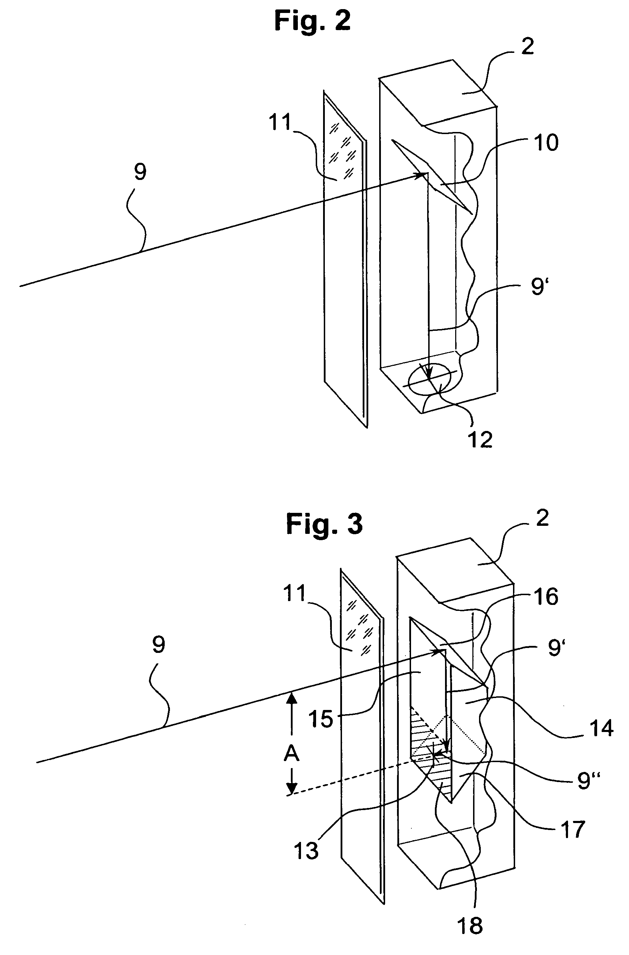

In einem weiteren Ausführungsbeispiel der Zieleinrichtung ist, wie in Figur 2 dargestellt, die Zielscheibe 12 direkt auf der Innenseite des Bodens vom Gehäuse 2 angebracht. Dies führt zu einer sehr kostengünstigen Ausführungsvariante, weil in diesem Falle die Funktion der Zielscheibe 12 durch eine einfache Kontrastmarke im Gehäuseboden ersetzt werden kann. Wenn das Gehäuse 2 beispielsweise in Druckguss- oder Kunststoffspritztechnik hergestellt wird, kann diese Kontrastmarke sogar schon in der Werkzeugform berücksichtig werden mit der Folge, dass dann für die eigentliche Zielscheibe 12 der Zieleinrichtung praktisch keine weiteren Kosten mehr entstehen.

Eine andere Ausführungsform der Zieleinrichtung ist in der Fig. 3 gezeigt. Hier wird die Funktion des Umlenkspiegels 10 und der Zielscheibe 12 von einem optischen Prisma 14 ausgeführt. Der Richtstrahl 9 tritt dabei durch die Basisfläche 15, die parallel zu Abschlussscheibe 11 ausgerichtet ist, in das Prisma 14 ein. Da der Richtstrahl 9 senkrecht auf die Basisfläche 15 auftrifft, wird der Richtstrahl 9 auch nicht abgelenkt und trifft auf die unter einem Winkel von 45° zur Basisfläche geneigte erste Außenfläche 16. Da das Prisma aus einem optischen Material mit einer Brechzahl n von ca. 1,5 hergestellt ist, wird der Richtstrahl 9 mittels einer Totalreflexion um 90° umgelenkt. Dieser umgelenkte Richtstrahl 9' trifft in der Folge auf die zweite Außenfläche 17, die mit der ersten Außenfläche einen Winkel von 90° bildet. An dieser zweiten Außenfläche 17 wird der Richtstrahl 9' in einer erneuten Totalreflexion wiederum um 90° umgelenkt, so dass der Richtstrahl 9" gegenüber dem ursprünglichen Richtstrahl 9 um 180° umgelenkt und um den Betrag A versetzt wieder auf die Basisfläche 15 auftrifft. Die Basisfläche 15 vom Prisma 14 ist in diesem Bereich 18 nicht poliert, sondern hat eine matte Oberfläche, vergleichbar mit einer Mattscheibe. Durch die von der Mattscheibe verursachte Aufstreuung des Richtstrahls 9" wird der Auftreffpunkt sehr gut deutlich gemacht. Dieser matte Bereich 18 übernimmt somit die Funktion der Zielscheibe 12. Auch hier ist es vorgesehen, in dem mattierten Bereich den Sollpunkt beispielsweise mit einer ringförmigen und/oder mit kreuzförmig angeordneten Linien 13 zu kennzeichnen. Insbesondere dann, wenn das Prisma 14 als Kunststoffprisma ausgeführt ist, stellt diese Variante eine sehr wirkungsvolle und preiswerte Lösung dar.

## Patentansprüche

1. Lichtschranke oder Lichtgitter mit wenigstens einem in einem ersten Gehäuse (1) angeordneten Lichtsender und mit wenigstens einem in einem zweiten Gehäuse (2) angeordneten und mit dem Lichtsender korrespondierenden Lichtempfänger sowie mit wenigstens einem im ersten oder zweiten Gehäuse eingebauten Ausrichtlichtsender zur Erzeugung wenigstens eines sichtbaren Richtstrahles (9) zur geometrischen Ausrichtung des Lichtsender auf den gegenüberliegenden Lichtempfänger, und in dem von dem Richtstrahl (9) beaufschlagten Gehäuse (2)mindestens eine Zieheinrichtung vorhanden ist, **dadurch gekennzeichnet, dass** die Zieleinrichtung aus mindestens einer den Richtstrahl (9) optisch ablenkenden Fläche (10) und einer Zielscheibe (12) besteht und die optisch ablenkende Fläche (10) den Richtstrahl (9) um 90° auf die Zielscheibe (12) ablenkt, so dass sich die Zieleinrichtung entlang der Gehäuseachse erstreckt, die senkrecht zum auftreffenden Richtstrahl (9) verläuft und die Oberfläche der Zielscheibe (12) derart ausgebildet ist, dass der auftreffende Lichtstrahl daran diffus gestreut wird

2. Lichtschranke oder Lichtgitter nach Anspruch 1, **dadurch gekennzeichnet, dass** die Zielscheibe (12) unter einem Winkel von 45° zu der Lichteintrittsfläche des Gehäuses (2) angeordnet ist.

3. Lichtschranke oder Lichtgitter nach Anspruch 1, **dadurch gekennzeichnet, dass** die Zielscheibe (12) auf der Innenseite des Bodens des Gehäuses (2) angeordnet ist.

4. Lichtschranke oder Lichtgitter nach einem der vorhergehenden Ansprüche, **dadurch gekennzeichnet, dass** auf der Zielscheibe (12) um den Sollpunkt herum ringförmige und/oder kreuzförmige Linien (13) angeordnet sind.

5. Lichtschranke oder Lichtgitter nach einem der vorhergehenden Ansprüche, **dadurch gekennzeichnet, dass** zum Eintritt des Richtstrahles (9) ins Gehäuse, zur Beobachtung des Auftreffpunktes des Richtstrahles (9) auf der Zelscheibe (12) und zum Lichtschranken-/Lichtgitterbetrieb die gleiche Abschlussscheibe (11) benutzt werden kann.

6. Lichtschranke oder Lichtgitter mit wenigstens einem in einem ersten Gehäuse (1) angeordneten Lichtsender und mit wenigstens einem in einem zweiten Gehäuse (2) angeordneten und mit dem Lichtsender korrespondierenden Lichtempfänger sowie mit wenigstens einem im ersten oder zweiten Gehäuse eingebauten Ausrichtlichtsender zur Erzeugung wenigstens eines sichtbaren Richtstrahles (9) zur geometrischen Ausrichtung des Lichtsenders auf den gegenüberliegenden Lichtempfänger, und in dem von dem Richtstrahl (9) beaufschlagten Gehäuse (2) mindestens eine Zieleinrichtung vorhanden ist, **dadurch gekennzeichnet, dass** die Zieleinrichtung aus mindestens einer den Richtstrahl (9) optisch ablenkenden Fläche (10) und einer Zielfläche (15) besteht, wobei die optisch ablenkenden Fläche (10) und die Zielfläche (15) der Zieleinrichtung in einem optisch transparenten Prisma (14) zusammengefasst sind.

7. Lichtschranke oder Lichtgitter nach Anspruch 6, **dadurch gekennzeichnet, dass** die Zielfläche (15) unter einem Winkel von 45° zu der Lichteintrittsfläche des Gehäuses (2) angeordnet ist.

8. Lichtschranke oder Lichtgitter nach einem der Ansprüche 6-7, **dadurch gekennzeichnet, dass** auf der Zielfläche (15) um den Sollpunkt herum ringförmige und/oder kreuzförmige Linien (13) angeordnet sind.

9. Lichtschranke oder Lichtgitter nach einem der vorhergehenden Ansprüche, **dadurch gekennzeichnet, dass** sich die Zieleinrichtung im Wesentlichen entlang der Gehäuseachse erstreckt, die senkrecht zum auftreffenden Richtstrahl (9) verläuft.

10. Lichtschranke oder Lichtgitter nach einem der Ansprüche 6-9, **dadurch gekennzeichnet, dass** zum Eintritt des Richtstrahles (9) ins Gehäuse, zur Beobachtung des Auftreffpunktes des Richtstrahles (9) auf der Zielfläche (15) und zum Lichtschranken-/Lichtgitterbetrieb die gleiche Abschlussscheibe (11) benutzt werden kann.

## Claims

1. A light barrier or light grid having at least one light transmitter arranged in a first housing (1) and at least one light receiver arranged in a second housing (2) and corresponding with the light transmitter as well as with at least one alignment light transmitter arranged in the first housing or in the second housing for generating at least one visible alignment beam (9) for the geometrical alignment of the light transmitter onto the oppositely disposed light receiver and wherein at least one aiming device is present in the housing (2) illuminated by the alignment beam (9), **characterized in that** the aiming device consists of at least one surface (10) which optically deflects the alignment beam (9) and a target (12) and **in that** the optical deflecting surface (10) deflects the alignment beam (9) through 90° onto the target (12) so that the aiming device extends along the housing axis which extends perpendicular to the incident alignment beam (9) and the surface of the target (12) is formed such that the incident light beam is diffusely scattered thereon.

2. A light barrier or light grid in accordance with claim 1, **characterized in that** the target (12) is arranged at an angle of 45° to the light entry surface of the housing (2).

3. A light barrier or light grid in accordance with claim 1, **characterized in that** the target (12) is arranged on the inner side of the floor of the housing (2).

4. A light barrier or light grid in accordance with one of the preceding claims, **characterized in that** ring-like and/or cross-like lines (13) are arranged on the target (12) around the desired point.

5. A light barrier or light grid in accordance with one of the preceding claims, **characterized in that** the same closing pane (11) can be used for the entry of the alignment beam (9) into the housing, for the observation of the point of incidence of the alignment beam (9) on the target (12) and for the light barrier/light grid operation.

6. A light barrier or light grid having at least one light transmitter arranged in a first housing (1) and at least one light receiver corresponding to the light transmitter arranged in a second housing (2) and also with at least one alignment light transmitter incorporated in the first housing or second housing for generating at least one visible alignment beam (9) for the geometrical alignment of the light transmitter on the oppositely disposed light receiver and in which at least one aiming device is present in the housing (2) illuminated by the alignment beam (9), **characterized in that** the aiming device consists of at least one surface (10) which optically deflects the alignment beam (9) and a target surface (15), with the optical deflecting surface (10) and the target surface (15) of the aiming device being combined in an optically transparent prism (14).

7. A light barrier or light grid in accordance with claim 6, **characterized in that** the target surface (15) is arranged at an angle of 45° to the light entry surface of the housing (2).

8. A light barrier or light grid in accordance with one of the claims 6-7, **characterized in that** ring-like and/or cross-like lines (13) are arranged on the target surface (15) around the desired point.

9. A light barrier or light grid in accordance with one of the preceding claims, **characterized in that** the aiming device extends substantially along the housing axis which extends perpendicular to the incident alignment beam (9).

10. A light barrier or light grid in accordance with one of the claims 6-9, **characterized in that** the same closing pane (11) can be used for the entry of the alignment beam (9) into the housing, for the observation of the point of incidence of the alignment beam (9) on the target surface (15) and for the light barrier/light grid operation.

## Revendications

1. Barrière lumineuse ou grille lumineuse comprenant au moins un émetteur de lumière disposé dans un premier boîtier (1) et au moins un récepteur de lumière disposé dans un second boîtier (2) et correspondant à l'émetteur de lumière, ainsi qu'au moins un émetteur d'alignement intégré dans le premier ou le second boîtier pour générer au moins un faisceau directeur (9) apparent pour l'alignement géométrique de l'émetteur de lumière sur le récepteur de lumière opposé, et au moins un dispositif de visée étant présent dans le boîtier (2) sollicité par le faisceau directeur (9), **caractérisée en ce que** le dispositif de visée comprend au moins une surface (10) déviant visuellement le faisceau directeur (9) et une cible (12) et la surface (10) de déviation visuelle dévie le faisceau directeur (9) de 90° sur la cible (12), de sorte que le dispositif de visée s'étend le long de l'axe du boîtier qui est perpendiculaire au faisceau directeur (9) arrivant et la surface de la cible (12) est conçue de telle sorte que le faisceau directeur arrivant est dispersé dessus de façon diffuse.

2. Barrière lumineuse ou grille lumineuse selon la revendication 1, **caractérisée en ce que** la cible (12) est disposée sous un angle de 45° par rapport à la surface d'entrée de lumière du boîtier (2).

3. Barrière lumineuse ou grille lumineuse selon la revendication 1, **caractérisée en ce que** la cible (12) est disposée sur le côté intérieur du fond du boîtier (2).

4. Barrière lumineuse ou grille lumineuse selon l'une des revendications précédentes, **caractérisée en ce que** des lignes (13) en forme d'anneau et/ou de croix sont disposées sur la cible (12) autour du point prévu.

5. Barrière lumineuse ou grille lumineuse selon l'une des revendications précédentes, **caractérisée en ce que** le même disque terminal (11) peut être utilisé pour l'entrée du faisceau directeur (9) dans le boîtier, pour l'observation du point d'impact du faisceau directeur (9) sur la cible (12) et pour le fonctionnement de la barrière lumineuse/grille lumineuse.

6. Barrière lumineuse ou grille lumineuse comprenant au moins un émetteur de lumière disposé dans un premier boîtier (1) et au moins un récepteur de lumière disposé dans un second boîtier (2) et correspondant à l'émetteur de lumière, ainsi qu'au moins un émetteur d'alignement intégré dans le premier ou le second boîtier pour générer au moins un faisceau directeur (9) visible pour l'alignement géométrique de l'émetteur de lumière sur le récepteur de lumière opposé, et au moins un dispositif de visé étant présent dans le boîtier (2) sollicité par le faisceau directeur (9), **caractérisée en ce que** le dispositif de visée comprend au moins une surface (10) déviant visuellement le faisceau directeur (9) et une surface cible (15), la surface (10) déviant visuellement et la surface cible (15) du dispositif de visée étant regroupées dans un prisme (14) visuellement transparent.

7. Barrière lumineuse ou grille lumineuse selon la revendication 6, **caractérisée en ce que** la surface cible (15) est disposée en formant un angle de 45° par rapport à la surface d'entrée de lumière du boîtier (2).

8. Barrière lumineuse ou grille lumineuse selon l'une des revendications 6 et 7, **caractérisée en ce que** des lignes (13) en forme d'anneau et/ou de croix sont disposées sur la surface cible (15) autour du point prévu.

9. Barrière lumineuse ou grille lumineuse selon l'une des revendications précédentes, **caractérisée en ce que** le dispositif de visée s'étend sensiblement le long de l'axe du boîtier qui est agencé perpendiculairement au faisceau directeur (9) arrivant.

10. Barrière lumineuse ou grille lumineuse selon l'une des revendications 6 à 9, **caractérisée en ce que** le même disque terminal (11) peut être utilisé pour l'entrée du faisceau directeur (9) dans le boîtier, pour l'observation du point d'impact du faisceau directeur (9) sur la surface cible (15) et pour le fonctionnement de la barrière lumineuse/grille lumineuse.
